# EUROPÄISCHE PATENTSCHRIFT

(11) **EP 0 709 672 B1**
(45) Veröffentlichungstag und Bekanntmachung des Hinweises auf die Patenterteilung: **14.08.2002**
(21) Anmeldenummer: 95250257.3
(22) Anmeldetag: 25.10.1995
(51) Int. Cl.: G01N 29/08, G01N 29/04

(54) **Verfahren und Einrichtung zum Überwachen einer Feder**
Method and apparatus for monitoring a spring
Procédé et dispositif de contrôle d'un ressort

(30) Priorität: 26.10.1994 DE 4439483
(43) Veröffentlichungstag der Anmeldung: 01.05.1996
(73) Patentinhaber: SIEMENS AKTIENGESELLSCHAFT, 80333 München (DE)
(72) Erfinder: Lorenz, Dieter, D-12207 Berlin (DE); Baltzer, Martin, D-10629 Berlin (DE); Bürger, Jens, D-68259 Mannheim (DE)

(56) Entgegenhaltungen:
- EP-A- 0 217 758
- US-A- 4 901 577
- US-A- 5 259 384

## Beschreibung

Die Erfindung bezieht sich auf ein Verfahren zum Überwachen einer ruhenden Feder, insbesondere einer Schraubenfeder, während des Betriebs auf Beschädigungen, bei dem an einem Federende ein Überwachungssignal eingespeist, über das Federmaterial zu einem Empfangsort geleitet und dort als Empfangssignal ausgekoppelt wird, das Empfangssignal mit einem Referenzsignal verglichen wird, das einem Empfangssignal bei unversehrter Feder entspricht, und bei Ungleichheit von Empfangssignal und Referenzsignal auf Federschaden erkannt wird.

Es sind dynamische und statische Bruchlastermittlungsverfahren bekannt, die zur Qualititätssicherung und Prüfung während der Federherstellung eingesetzt werden. Diese Verfahren sind jedoch zur Überwachung einer montierten Feder während des Betriebs nicht geeignet. Aus der EP-A1-0 586 015 ist eine Einrichtung zur Überwachung der Unversehrtheit von Federn bekannt, die auf einem bei unversehrter Feder unbehinderten Durchtritt der Federwindungen durch Ausnehmungen einer auf die Windungsgeometrie abgestimmten Lehre (Tastglied) basiert. Diese Einrichtung ist verhältnismäßig aufwendig und erfordert zusätzlichen Bauraum. Außerdem muß der aktive Federbereich für das Tastglied zugänglich sein.

Eine aus der DE-OS 42 13 884 bekannte Überwachung einer Blattfeder bedient sich ausschließlich der Messung der elektrischen Leitfähigkeit. Mikroskopische Risse, die bei Belastungen der Feder einem hohen Kontaktdruck unterliegen, müssen jedoch keine Änderung des Leitwertes hervorrufen. Durch die vorbekannte Überwachungsmethode wird daher ein Schaden bei einer Feder erst dann signalisiert, wenn ein klaffender Riß im Bereich von leitfähigen Teilen der Feder entstanden ist.

Bei dem aus der DE-AS 29 37 824 bekannten Verfahren wird ein Impuls durch einen an dem zu überwachenden Bauteil befestigten Lichtwellenleiter geschickt und es wird das Übertragungsverhalten des Lichtwellenleiters gemessen und analysiert.

Eine Befestigung eines Lichtwellenleiters an einer Feder, insbesondere an einer Schraubenfeder, die im Zuge ihres Betriebes Spannungs- und Entspannungsbewegungen ausgesetzt ist, ist aus naheliegenden Gründen nicht möglich. Der Lichtwellenleiter würde beim ersten Strecken der Feder abreißen, obwohl die Feder noch vollkommen intakt ist.

Der Erfindung liegt die Aufgabe zugrunde, ein Verfahren und eine Einrichtung zum Überwachen einer Feder am Einsatzort während des Betriebs zu schaffen, um mit geringem Aufwand auch bei schwer zugänglichen und/oder bewegten Federn zuverlässig eine gebrochene oder beschädigte Feder zu erkennen.

Diese Aufgabe wird bei einem Verfahren der eingangs genannten Art erfindungsgemäß dadurch gelöst, daß das Überwachungssignal eine Impulsform aufweist und als Schall- oder Ultraschallimpuls ausgebildet ist.

Vorzugsweise wird erst beim Überschreiten eines vorgebbaren Toleranzwertes auf Ungleichheit erkannt, um geringfügige, z. B. schaltungs- oder auswertungstechnisch bedingte Abweichungen zwischen Empfangssignal bei intakter Feder und Referenzsignal zu tolerieren. Ein wesentlicher Vorteil der Erfindung besteht darin, daß das Material der überwachten Feder selbst unmittelbar die Überwachungsstrecke bildet, so daß sich durch Bruch oder Beschädigungen hervorgerufene Veränderungen des Signalweges unmittelbar erkennen lassen. Bei Anzeige einer beschädigten Feder kann der Betreiber rechtzeitig sein Wartungsverhalten darauf einstellen. Ein weiterer Vorteil der Erfindung besteht darin, daß nur das oder die Ende(n) der Feder zur Überwachung zugänglich sein müssen; der aktive (d.h. durch elastische Verformung Federenergie speichernde) Federbereich bleibt von Überwachungseinrichtungen unberührt und unbeeinflußt. Der aktive Federbereich ist deshalb vollständig kapselbar, was z. B. in der Hochspannungstechnik wünschenswert sein kann.

Durch die Verwendung von Schall- und Ultraschallimpulsen ist das erfindungsgemäße Verfahren unabhängig von elektrischen Leiteigenschaften des Federmaterials. Es enthält auch die Notwendigkeit, die zu überwachende Feder isoliert einzubauen, was gerade bei einer hochbelasteten Antriebsfeder für einen Hochspannungs-Leistungsschalter sehr schwierig ist, da viele Isolierwerkstoffe unter dem hohen Druck fließen.

Bei der Verwendung von Schallimpulsen können diese beispielsweise einfach durch Schläge auf die Feder erzeugt werden.

Es ist auch denkbar, den nach außen abgestrahlten Schall der Feder nach einer Anregung durch einen Schlag zu analysieren, um Veränderungen festzustellen.

Eine vorteilhafte Weiterbildung der Erfindung besteht darin, daß das Überwachungssignal und das Empfangssignal an demselben Federende eingespeist bzw. empfangen werden und daß am anderen Federende für eine Reflexion des Überwachungssignals gesorgt wird. Diese Ausgestaltung der Erfindung bietet den besonderen Vorteil, daß nur ein (unbewegtes) Ende der Feder für die Überwachung zugänglich sein muß. Da das Überwachungssignal das Federmaterial infolge der Reflexion zweimalig durchläuft, treten beim Signaldurchlauf zu beobachtende Wandlerwelleneffekte und eine Überwachungssignalbeeinflussung an einer Bruchstelle besonders deutlich hervor. Ein Federschaden kann deshalb besonders zuverlässig erkannt werden.

Als besonders vorteilhaft wird es im Rahmen der vorliegenden Erfindung angesehen, wenn als Überwachungssignal, Rechteckimpulse oder Dreieckimpulse, bekannter Form und Dauer verwendet werden. Eine Überwachungssignalveränderung bei Federschaden ist nämlich aufgrund der besonders gut detektierbaren Laufzeitunterschiede bezüglich an der Schadensstelle reflektierter Impulse besonders gut erkennbar.

Eine Einrichtung zum Überwachungen einer ruhenden Feder, insbesondere einer Schraubenfeder, während des Betriebs auf Beschädigungen, insbesondere Bruch, sieht vor, daß ein Sender an einem Ende der Feder ein Überwachungssignal einspeist, das über das Material der Feder als Empfangssignal zu einem Empfänger gelangt, daß ein Vergleicher das Empfangssignal mit einem Referenzsignal vergleicht, das dem bei unversehrter Feder empfangenen Empfangssignal entspricht und daß eine Auswerteeinrichtung bei Ungleichheit von Empfangssignal und Referenzsignal eine Beschädigung der Feder anzeigt.

Erfindungsgemäß ist diese Einrichtung derart ausgebildet, daß das Überwachungssignal eine Impulsform aufweist und als Schall- oder Ultraschallimpuls ausgebildet ist.

Die Erfindung wird nachfolgend anhand einer Zeichnung beispielhaft weiter erläutert; es zeigen: Figur 1 ein Flußdiagramm zur Verfahrenserläuterung und die Figuren 2 und 3 erfindungsgemäße Einrichtungen.

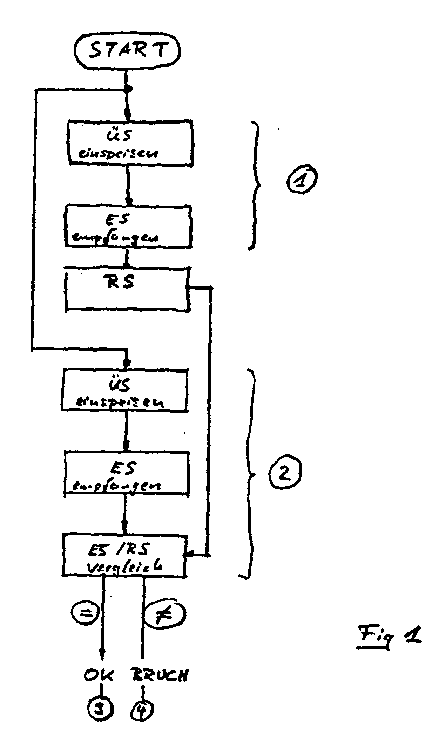

Gemäß Figur 1 wird zumindest beim erstmaligen Einsatz des erfindungsgemäßen Verfahrens - z.B. nach der Montage einer Schraubenfeder in einer Hochspannungsschaltanlage - bei nachweislich unversehrter Feder ein Überwachungssignal ÜS in nachfolgend noch näher erläuterter Weise in ein Ende der Feder eingespeist. An einem Empfangsort desselben oder des anderen Federendes wird infolge des Überwachungssignals ÜS ein Empfangssignal ES empfangen. Dieses Empfangssignal wird als Referenzsignal RS gespeichert. Die Gewinnung des Referenzsignals RS ist in Figur 1 mit dem Verfahrensabschnitt 1 bezeichnet.

Um die montierte Feder im Betrieb zu überwachen, werden als Überwachungssignal ÜS vorzugsweise Rechteck- oder Dreieckimpulse periodisch in die Feder eingespeist und das am Empfangsort auftretende Empfangssignal ES mit dem Referenzsignal RS verglichen. Dieser Verfahrensschritt ist in Figur 1 mit 2 bezeichnet. Wenn Empfangssignal ES und Referenzsignal RS gleich sind - oder ihre Abweichung innerhalb eines vorgegebenen Toleranzbereiches liegt, der umgebungsindividuelle, federspezifische oder schaltungstechnisch bedingte geringe Abweichungen des Empfangssignals bei einer unversehrten Feder von dem Referenzsignal berücksichtigt -, wird die überwachte Feder als unversehrt eingestuft (Verfahrensende 3). Sind Empfangssignal und Referenzsignal dagegen (unter Berücksichtigung des Toleranzbereiches) ungleich, wird auf Federschaden erkannt (Verfahrensende 4).

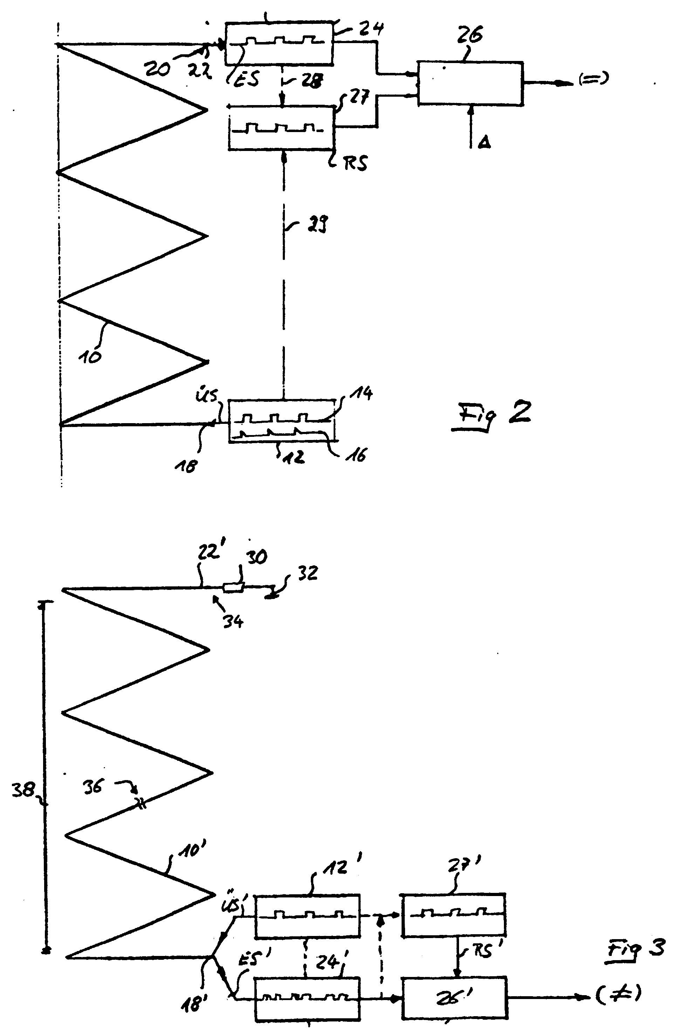

Figur 2 zeigt eine Einrichtung zur Anwendung des erfindungsgemäßen Verfahrens bei einer Schraubenfeder 10. Ein Sender 12 koppelt wahlweise Rechteckimpulse 14 oder Dreieckimpulse 16 als Überwachungssignal ÜS in das eine Ende 18 der Feder 10 ein. Die Impulse durchlaufen das Federmaterial und treten an einem Empfangsort 20 am anderen Ende 22 der Feder 10 als Empfangssignal ES auf. Das von einem Empfänger 24 empfangene und ggf. verstärkte Empfangssignal ES wird einem Vergleicher 26 zugeführt. Ein anderer Eingang des Vergleichers 26 ist mit dem in einem Speicher 27 gespeicherten Referenzsignal RS beaufschlagt. Das Referenzsignal RS entspricht dem bei unversehrter Feder 10 am Empfangsort 20 empfangenen Überwachungssignal ÜS und kann in der in Zusammenhang mit Figur 1 erläuterten Weise gewonnen werden; dies ist durch den gestrichelten Pfeil 28 angedeutet. Alternativ kann das Referenzsignal RS - bei Kenntnis der Signalübertragungseigenschaften der unversehrten Feder 10 - auch unmittelbar von dem Sender 12 generiert und im Speicher 27 abgelegt werden; dies ist durch den gestrichelten Pfeil 29 angedeutet. Der Vergleicher 26 vergleicht das Empfangssignal ES mit dem Referenzsignal RS unter Berücksichtigung einer vorgebbaren Toleranz Δ. Da die Feder 10 im Ausführungsbeispiel gemäß Figur 2 unversehrt ist, gibt der Vergleicher 26 ein die Feder als unversehrt kennzeichnendes Signal (=) ab (Verfahrensende 3 in Figur 1).

Bei der in Figur 3 gezeigten Variante befinden sich ein Sender 12' und ein Empfänger 24' an demselben Ende 18' einer Feder 10'. Die Feder 10' ist von anderen Bauteilen komplett elektrisch isoliert und bildet durch einen definierten Widerstand 30 zwischen ihrem anderen Ende 22' und Massepotential 32 ein geschlossenes Ende 34, das elektrische Signale reflektiert. Die Feder 10' weist eine Bruchstelle 36 in ihrem aktiven Federbereich 38 auf. Von dem Sender 12' in die Feder 10' eingespeiste Reckteckimpulse als Überwachungssignal ÜS' werden an der Bruchstelle 36 teilweise reflektiert und zu dem Empfänger 24' als Empfangssignal ES' zurückgeworfen. Das Überwachungssignal ÜS' gelangt zum Teil über die Bruchstelle 36 zu dem reflektierenden Ende 34 und von dort erneut über die Bruchstelle 36 unter weiterer Überwachungssignalverzerrung schließlich als Empfangssignal ES' zu dem Empfänger 24' zurück. Ein dem Empfänger nachgeschalteter Vergleicher 26' wird von einem Speicher 27' mit dem Referenzsignal RS' beaufschlagt. Aufgrund der erheblichen Abweichung des Empfangssignals ES' von dem Referenzsignal RS' gibt der Vergleicher 26' ausgangsseitig ein Signal (t) ab, das einen Bruch der Feder anzeigt (vgl. Verfahrensende 4 in Figur 1). Die bevorzugt eingesetzten impulsartigen Überwachungssignale vorgegebener Form und Dauer lassen sich wegen der an Bruchstellen und Schädigungen auftretenden Reflexionseffekte und der daraus resultierenden Laufzeitunterschiede besonders präzise detektieren. Die durch Bruchstellen erzeugten Wanderwelleneffekte führen zu einer zusätzlichen Verschleierung des Überwachungssignals. so daß das infolge einer Bruchstelle beeinflußte Empfangssignal äußert zuverlässig detektierbar ist. Der Sender speist Ultraschallsignale, in Impulsform, in die Feder ein und ein entsprechender Ultraschallempfänger ist vorgesehen.

## Patentansprüche

1. Verfahren zum Überwachen einer ruhenden Feder (10), insbesondere einer Schraubenfeder, während des Betriebs auf Beschädigungen, bei dem
- an einem Federende (18) ein Überwachungssignal (ÜS) eingespeist, über das Federmaterial zu einem Empfangsort 20) geleitet und dort als Empfangssignal (ES) ausgekoppelt wird,
- das Empfangssignal (ES) mit einem Referenzsignal (RS) verglichen wird, das einem Empfangssignal bei unversehrter Feder (10) entspricht, und
- bei Ungleichheit von Empfangssignal (ES) und Referenzsignal (RS) auf Federschaden (4) erkannt wird,
wobei
das Überwachungssignal eine Impulsform aufweist und als Schall- oder Ultraschallimpuls ausgebildet ist.

2. Verfahren nach Anspruch 1,
**dadurch gekennzeichnet, daß**
das Überwachungssignal (ÜS') und das Empfangssignal (ES') an demselben Federende (18') eingespeist bzw. empfangen werden und daß am anderen Federende (22') für eine Reflexion des Überwachungssignals (ÜS') gesorgt wird.

3. Einrichtung zum Überwachungen einer ruhenden Feder (10), insbesondere einer Schraubenfeder, während des Betriebs auf Beschädigungen, insbesondere Bruch, bei der
- ein Sender (12) an einem Ende (18) der Feder (10) ein Überwachungssignal (ÜS) einspeist, das über das Material der Feder (10) als Empfangssignal (ES) zu einem Empfänger (24) gelangt,
- ein Vergleicher (26) das Empfangssignal (ES) mit einem Referenzsignal (RS) vergleicht, das dem bei unversehrter Feder (10) empfangenen Empfangssignal (ES) entspricht und bei Ungleichheit von Empfangssignal (ES) und Referenzsignal (RS) eine Beschädigung der Feder (10) anzeigt,
wobei
das Überwachungssignal eine Impulsform aufweist und als Schall- oder Ultraschallimpuls ausgebildet ist.

## Claims

1. Method for monitoring during operation a static spring (10), in particular a helical spring, for damage, in which
- at one end (18) of the spring a monitoring signal (ÜS) is input, via which spring material is conducted to a receiving site (20) and there decoupled as a receiving signal (ES),
- the receiving signal (ES) is compared with a reference signal (RS), corresponding to a receiving signal if the spring (10 is intact, and
- if the receiving signal (ES) and the reference signal (RS) are different, damage (4) to the spring is identified,
wherein the monitoring signal has the form of a pulse and is constructed as an acoustic or ultrasound pulse.

2. Method according to claim 1, **characterised in that** the monitoring signal (ÜS') and the receiving signal (ES') are input or received at the same end (18') of the spring and at the other end (22') of the spring reflection of the monitoring signal (ÜS') is provided.

3. Device for monitoring during operation a static spring (10), in particular a helical spring, for damage, in particular breaking, in which
- a transmitter (12) at one end (18) of the spring (10) inputs a monitoring signal (ÜS), which reaches a receiver (24) as a receiving signal (ES) via the material of the spring (10),
- a comparator (26) compares the receiving signal (ES) with a reference signal (RS), corresponding to the receiving signal (ES) received if the spring (10) is intact, and if the receiving signal (ES) and the reference signal (RS) are different indicates damage to the spring (10),
wherein the monitoring signal has the form of a pulse and is constructed as an acoustic or ultrasound pulse.

## Revendications

1. Procédé de contrôle d'un ressort (10) au repos, notamment d'un ressort hélicoïdal, pendant le fonctionnement pour déterminer s'il est endommagé, dans lequel :
- on envoie à une extrémité (18) du ressort un signal (ÜS) de contrôle qui est acheminé par le matériau du ressort jusqu'à un emplacement (20) de réception et y sort en tant que signal (ES) de réception,
- on compare le signal (ES) de réception à un signal (RS) de référence qui correspond à un signal de réception lorsque le ressort (10) est intact, et
- on reconnaît que le ressort est endommagé (4) par l'inégalité entre le signal (RS) de réception et le signal de référence,
le signal de contrôle comportant une forme d'impulsion et étant constitué sous la forme d'une impulsion sonore ou d'une impulsion ultrasonore.

2. Procédé suivant la revendication 1, **caractérisé en ce que** l'on envoie et l'on reçoit le signal (ÜS') de contrôle et le signal (ES') de réception à la même extrémité (18') du ressort et **en ce que** l'on ménage à l'autre extrémité (22') du ressort une réflexion du signal (ÜS') de contrôle.

3. Dispositif de contrôle d'un ressort (10) au repos, notamment d'un ressort hélicoïdal, pendant le fonctionnement pour déterminer s'il est endommagé, notamment pour déterminer s'il y a une rupture dans lequel :
- un émetteur (12) envoie à une extrémité (18) du ressort (10) un signal (ÜS) de contrôle qui arrive par le matériau du ressort (10) en tant que signal (ES) de réception à un récepteur (24),
- un comparateur (26) compare le signal de réception à un signal (RS) de référence qui correspond lorsque le ressort est intact au signal (ES) de réception reçu et qui indique que le ressort (10) est endommagé si le signal (ES) de réception n'est pas égal au signal (RS) de référence,
dans lequel le signal de contrôle a une forme d'impulsion et est constitué sous la forme d'une impulsion sonore ou d'une impulsion ultrasonore.
